# EUROPEAN PATENT APPLICATION

(11) **EP 3 051 284 A1**
(43) Date of publication of application: **03.08.2016**
(21) Application number: 16151115.9
(22) Date of filing: 13.01.2016
(51) Int. Cl.: G01N 29/07

(54) **STRUCTURAL DEFORMATION DETECTING DEVICE**

(30) Priority: 14.01.2015 JP 2015004960
(71) Applicant: Toshiba TEC Kabushiki Kaisha, Tokyo 141-0032 (JP)
(72) Inventor: KOMIYA, Kenichi, Shinagawa-ku, Tokyo 141-0032 (JP); ISHIKAWA, Daisuke, Shinagawa-ku, Tokyo 141-0032 (JP)
(74) Representative: Takeuchi, Maya

(57) **Abstract**

A structural deformation detecting device comprises a vibration section (2) provided with a plurality of vibrators for vibrating a structure (4) serving as a measured object in a non-contact manner, a vibration measurement section (1) configured to detect the vibration wave (6) generated in the measured object (4) at any measurement position in a non-contact manner, a housing (3) on which the vibration section (2) and the vibration measurement section (1) are arranged at a specific interval (L₀), a time measurement section configured to measure the time elapsing till the vibration wave (6) in the measured object (4) is detected by the first vibration measurement section (1) at a specific position, and a deformation determination section configured to determine whether or not there is a deformation (5) by comparing the time taken for the transmission of vibration from the vibration position to the measurement position in a deformation-free state with the time measured by the time measurement section.

Fig. 2

## Description

### FIELD

Embodiments described herein generally relate to a technology for detecting the deformation (crack, crackle and internal defect) of a structure such as a bridge or tunnel in a non-contact manner.

### BACKGROUND

A detecting device (see Japanese Unexamined Patent Application Publication No. Hei 8-248006) has been provided to detect the deformation, for example, the crackle, of a structure such as a bridge or tunnel in a non-contact manner.

The non-contact structural deformation detecting device disclosed in see Japanese Unexamined Patent Application Publication No. Hei 8-248006 comprises a non-contact vibration section configured to vibrate an inspected structure (hereinafter referred to as a measured object) by applying ultrasonic waves oscillated by an ultrasonic oscillator to the inspected structure and a vibration measurement section configured to measure, using a laser Doppler Vibrometer, the vibration of the measured object vibrated by the vibration section.

The vibration section of the structural deformation detecting device which is arranged far away from the measured object oscillates ultrasonic waves towards a detection point on the surface of the measured object or a specific area containing the detection point, thereby vibrating the measured object in a non-contact manner. Further, the vibration measurement section which is also arranged far away from the measured object emits laser beams towards a deformation detection point on the measured object being vibrated, receives the light reflected from the deformation detection point and measures the vibration of the deformation detection point according to the reflected light received to detect whether or not there is a deformation at the deformation detection point.

As a method for detecting whether or not there is a deformation at the deformation detection point, a distance between the vibration point on the measured object and the irradiation point of the laser beams emitted from the vibration measurement section is set as the specific distance. Whether or not there is a deformation at the deformation detection point is determined according to whether or not the time taken for the transmission of the vibration for the specific distance is different from a specific time.

However, as the vibration section and the vibration measurement section are independent devices which set an ultrasonic wave irradiation position and a laser beam irradiation position independently for the measured object, it is needed to carry out an adjustment processing to keep a fixed position relationship between the laser beam irradiation position and the ultrasonic wave irradiation position when a measurement point is changed.

Further, it is assumed that the vibration section and the vibration measurement section are both large devices for a long-distance high-precision measurement.

To the above end, there is provided a structural deformation detecting device, comprising:
a vibration section configured to include a plurality of vibrators for vibrating a structure serving as an object to be measured in a non-contact manner;
a vibration measurement section configured to detect, in a non-contact manner, the vibration generated in the object to be measured at any measurement position;
a housing on which the vibration section and the vibration measurement section are arranged at a specific interval;
a time measurement section configured to measure the time elapsing till the vibration of the object to be measured caused by an optional vibrator is detected by the vibration measurement section at a specific position; and
a deformation determination section configured to determine whether or not there is a deformation by comparing the time taken for the transmission of vibration from the vibration position to the measurement position in a deformation-free state with the time measured by the time measurement section.

Preferably, the plurality of vibrators constituting the vibration section are arranged into a matrix.

Preferably still, the vibration measurement section is configured to set a measurement position optionally on the measured surface of the measured object.

Preferably yet, the vibrator comprises a parametric speaker.

Suitably, the vibration measurement section comprises a two-dimensional laser Doppler vibrometer.

Suitably still, the vibration measurement section comprises a two-dimensional laser Doppler vibrometer that is based on a self-mixing interferometry.

The invention also relates to a method for detecting a deformation in a structure, comprising the steps of:
- providing a housing comprising a vibration section and a vibration measurement section that are arranged at a specific interval;
- vibrating a structure serving as a measured object in a non-contact manner;
- detecting in a non-contact manner the vibration generated in the measured object at any measurement position;
- measuring the time elapsing till the vibration of the measured object caused by an optional vibrator is detected through the vibration measurement section at a specific position; and
- determining a deformation by comparing the time taken for the transmission of vibration from the vibration position to the measurement position in a deformation-free state with the time measured through the time measurement step.

Preferably, the vibration measurement step comprises the step of emitting laser beams for irradiation, the method further comprising the steps of:
- setting, as the specific distance, a distance between the vibration point on the measured object and the irradiation point of the laser beams emitted from the vibration measurement step.

Preferably still, the deformation determination step comprises determining whether or not the time taken for the transmission of the vibration for the specific distance is different from a specific time.

Preferably yet, the vibration section and the vibration measurement section set an ultrasonic wave irradiation position and a laser beam irradiation position, respectively, for the object to be measured, and the method further comprises the step of keeping a fixed position relationship between both positions, when a measurement position is changed.

Typically, the vibration measurement section comprises a two-dimensional laser Doppler vibrometer based on a self-mixing interferometry and the vibration-detecting step comprises detecting it by using the two-dimensional laser Doppler vibrometer.

The invention further concerns the use of the structural deformation detecting device as defined above, for detecting the deformation of a structure in a non-contact manner.

Preferably, the structure has a surface made of concrete.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic front view of a structural deformation detecting device according to a first embodiment;
Fig. 2 is a diagram illustrating a state in which a structure is not deformed in a cross-sectional side view of the structural deformation detecting device shown in Fig. 1;
Fig. 3 is a diagram illustrating the structure of the parametric speaker of a vibration section shown in Fig. 1;
Fig. 4 is a diagram illustrating a state in which a structure is deformed in a cross-sectional side view of the structural deformation detecting device shown in Fig. 1;
Fig. 5 is a diagram illustrating the circuit of the laser Doppler vibrometer constituting a vibration measurement section shown in Fig. 1;
Fig. 6 is a flowchart illustrating the basic procedures of the detection operation of the structural deformation detecting device shown in Fig. 1;
Fig. 7 is a diagram illustrating a state in which a structure is not deformed in a schematic cross-sectional side view of a structural deformation detecting device according to a second embodiment;
Fig. 8 is a diagram illustrating a state in which a structure is deformed in a schematic cross-sectional view of a structural deformation detecting device according to the second embodiment;
Fig. 9 is a diagram illustrating the control circuit of a parametric speaker of a vibration section shown in Fig. 7;
Fig. 10 is a diagram illustrating the control circuit of a vibration measurement section shown in Fig. 7;
Fig. 11 is a diagram illustrating the system configuration of the structural deformation detecting device shown in Fig. 7;
Fig. 12 is a diagram illustrating a state in which a structure is not deformed in the illustration diagram of the configuration of the speaker of the structural deformation detecting device shown in Fig. 7;
Fig. 13 is a diagram illustrating a state in which a structure is deformed in the illustration diagram of the scanning operation of the structural deformation detecting device shown in Fig. 7;
Fig. 14 is a flowchart illustrating the procedures of a structural deformation detection operation executed by the system shown in Fig. 11; and
Fig. 15 is a diagram illustrating the configuration of a speaker of a structural deformation detecting device according to a third embodiment.

### DETAILED DESCRIPTION

In accordance with an embodiment, a structural deformation detecting device comprises a vibration section provided with a plurality of vibrators for vibrating a structure serving as a measured object in a non-contact manner, a vibration measurement section configured to detect the vibration generated in the measured object at any measurement position in a non-contact manner, a housing on which the vibration section and the vibration measurement section are arranged at a specific interval, a time measurement section configured to measure the time elapsing till the vibration of the measured object caused by an optional vibrator is detected by the first vibration measurement section at a specific position, and a deformation determination section configured to determine whether or not there is a deformation by comparing the time taken for the transmission of vibration from the vibration position to the measurement position for a measured object in a deformation-free state with the time measured by the time measurement section.

Embodiments of the structural deformation detecting device are described below with reference to accompanying drawings.

### (First Embodiment)

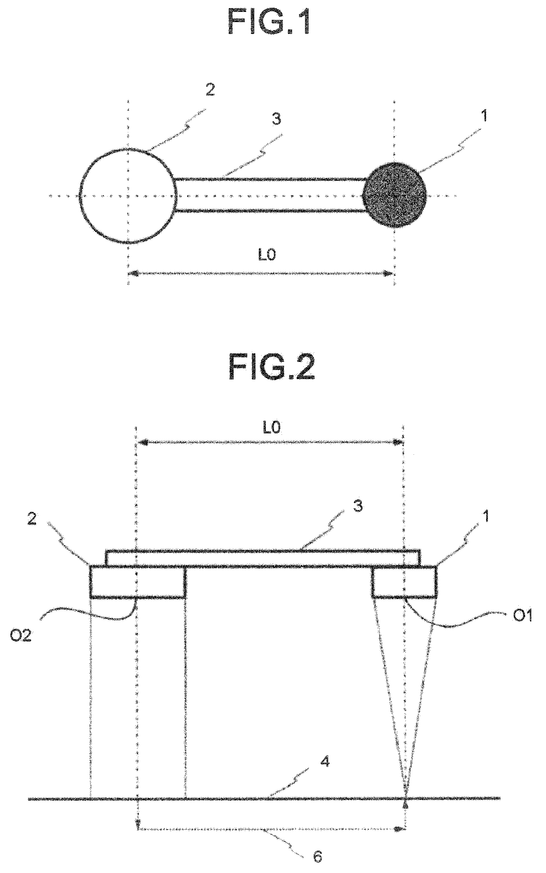

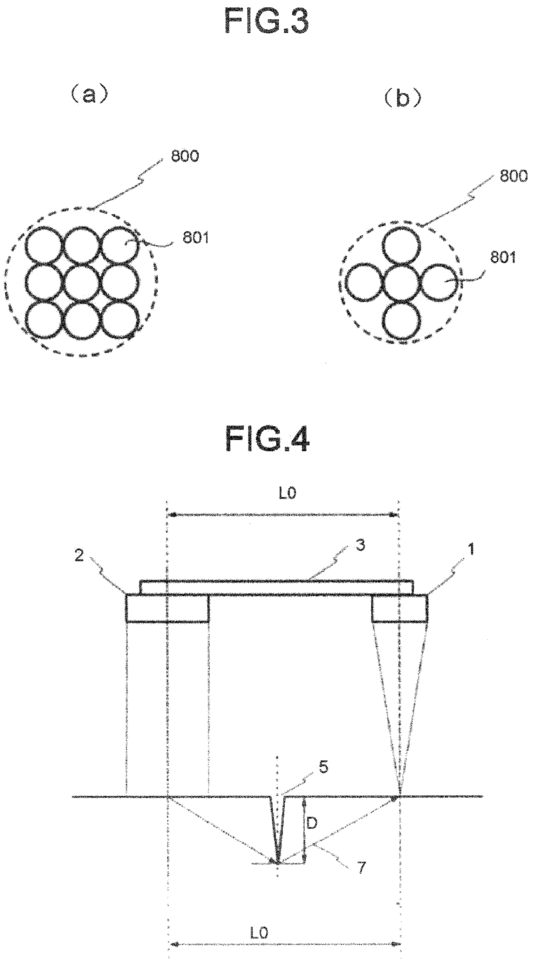

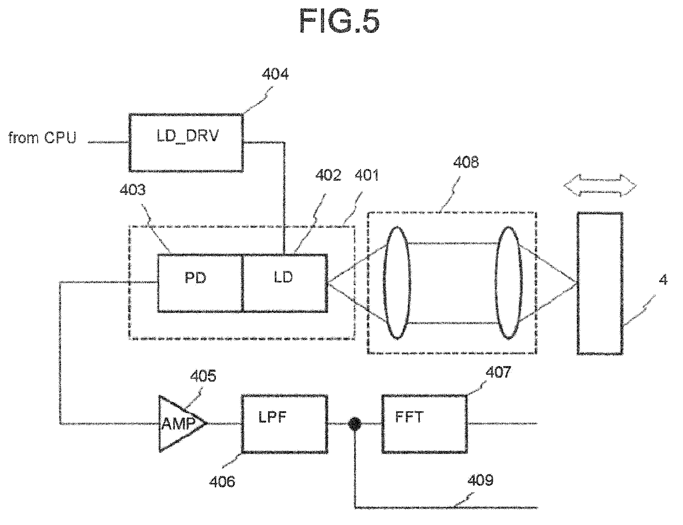

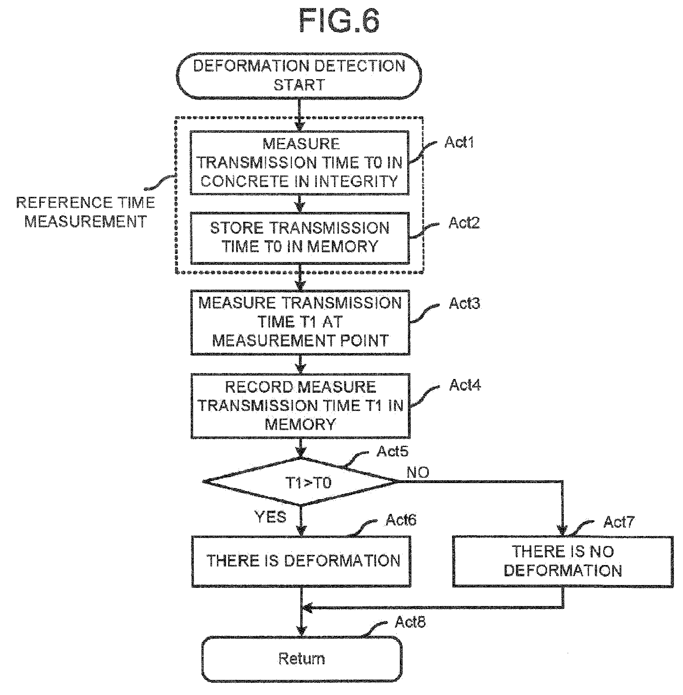

Fig. 1 is a schematic front view of a structural deformation detecting device according to the first embodiment; Fig. 2 is a diagram illustrating a state in which a structure is not deformed in a cross-sectional side view of the structural deformation detecting device shown in Fig. 1; Fig. 3 is a diagram illustrating the structure of the parametric speaker of a vibration section shown in Fig. 1; Fig. 4 is a diagram illustrating a state in which a structure is deformed in a cross-sectional side view of the structural deformation detecting device shown in Fig. 1. Fig. 5 is a diagram illustrating the circuit of the laser Doppler vibrometer constituting a vibration measurement section shown in Fig. 1; Fig. 6 is a flowchart illustrating the basic procedures of the detection operation of the structural deformation detecting device shown in Fig. 1.

As shown in Fig. 1 and Fig. 2, the structural deformation detecting device 10 is arranged opposite to a measured object 4 made of concrete or mortar and spaced from the measured object 4 by a specific set distance to measure the vibration of a measurement point in a non-contact manner. The structural deformation detecting device 10 comprises a vibration section 2 equipped with a speaker 800 serving as a vibrator and a vibration measurement section 1.

The vibration section 2 and the vibration measurement section 1 are arranged on a housing 3 in such a manner that the axis of the acoustic waves output from the vibration section 2 in the output direction of the acoustic waves is oriented towards the same direction (the front) with the axis of the laser beams emitted from the vibration measurement section 1. If the output center of the acoustic waves output from the vibration section 2 is set as 02 and the emitting center of the laser beams output from the vibration measurement section 1 is set as O1, then the vibration section 2 and the vibration measurement section 1 are fixed on and integrated with the housing 3 with the distance between the output center 02 and the emitting center O1 set as a specific interval L0.

The set distance is set in consideration of the focal length of a laser Doppler vibrometer constituting the vibration measurement section 1 or the distance reachable to the acoustic waves output from the vibration section 2. In the present embodiment, it is assumed that the small structural deformation detecting device can be carried by an operator, thus, the set distance is set to about m meters.

In Fig. 1, the speaker 800 serving as the vibrator of the vibration section 2 is, for example, a parametric speaker, a flat speaker, a loudspeaker, a gas gun, a shock tube or any device that can vibrate a measured object in a non-contact manner. A parametric speaker 800 is described below as an example of the speaker constituting the vibration section 2 in the present embodiment.

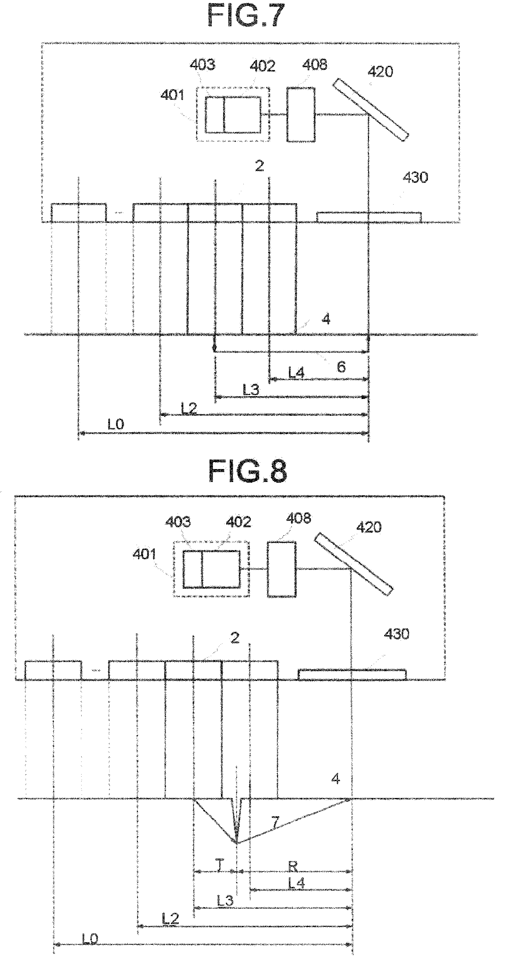

On the other hand, the vibration measurement section 1 consists of a two-dimensional laser Doppler vibrometer, and a lens section 430 serving as an incident and emitting port for the laser beams emitted from the two-dimensional laser Doppler vibrometer is arranged on the front of the housing 3 (refer to Fig. 7).

As the structure of the parametric speaker 800, a plurality of transducers 801 (e.g. ultrasonic piezoelectric elements) are arranged in a plane, as shown in Fig. 3(a) and Fig. 3(b). Each transducer 801 has a directivity of about 60-70 degrees or higher if a plurality of transducers 801 are structured as shown in Fig. 3(a). Thus, the ultrasonic waves emitted from the parametric speaker 800 substantially linearly irradiate the measured object 4 with a directivity of certain angles (Fig. 3). That is, the center part of the parametric speaker 800 is substantially coincident with the center part 02 of the ultrasonic waves emitted from the parametric speaker 800.

On the other hand, in the present embodiment, the two-dimensional scanning laser Doppler vibrometer is a self-mixing interferometry based laser Doppler vibrometer. Self-mixing interferometry refers to a method for measuring the motion (vibration) of a measured object by making a laser beam output from a laser interfere with the scattered light received from the vibrating measured object inside the laser. That is, with the use of self-mixing interferometry, the vibration of a measured object being irradiated with laser beams can be measured.

The vibration section 2 irradiates the measured object 4 made of concrete or mortar with ultrasonic waves to vibrate the measured object 4. The ultrasonic vibration generated in the measured object 4 by irradiating the measured object 4 with ultrasonic waves (applying ultrasonic waves to the measured object 4) is transmitted in the surface of the measured object 4 and detected by the laser Doppler vibrometer at a measurement point being irradiated with the laser beams from the vibration section 1.

It is assumed that the surface of the measured object 4 is concrete. A vibration wave 6 (refer to Fig. 2) vibrated by the ultrasonic waves emitted from the vibration section 2 is transmitted in the surface of concrete directly (for the shortest distance). Further, the time T0 (transmission time) elapsing till the vibration wave 6 is detected by the vibration section 1 is measured and recorded in a memory in advance. The time T0 indicates the time taken for the transmission of ultrasonic waves for a distance L0 in concrete in integrity that is not subjected to a deformation such as crack, crackle, bump or peeling.

On the other hand, Fig. 4 is a diagram illustrating a case where a measured object is cracked concrete. In this case, the ultrasonic vibration 7 generated in the measured object 4 which cannot be transmitted to the crack part 5, is transmitted circuitously to the top in the depth D direction of the crack and finally to the measurement point of the laser Doppler vibrometer.

That is, if concrete is cracked, crackled or peeled, then ultrasonic wave cannot be transmitted in the surface of concrete and is consequentially transmitted for a longer distance. As ultrasonic waves are transmitted through concrete at a substantially fixed speed, the time measured by the vibration section 1 concerning the transmission of ultrasonic waves through cracked, crackled or peeled concrete is longer than that measured concerning the transmission of ultrasonic waves in concrete in integrity. It is set that the time taken for the transmission of ultrasonic waves to a measurement point is set to T1.

That is, the transmission time T0 (calibration) taken for the transmission of ultrasonic waves to a measurement point on concrete in integrity is measured and recorded in advance, and if the transmission time T1 taken for the transmission of ultrasonic waves in a measured object is longer than the transmission time T0, then it can be determined that the measured object is deformed (e.g. cracked, crackled or peeled).

In Fig. 5, the laser Doppler vibrometer 1 concentrates the laser beams output from a semiconductor laser 402 of a laser section 401 on the measured object 4 through an optical unit 408. The concentrated laser beams are reflected by the measured object 4, the scattered light is interfered with the laser beams inside the semiconductor laser 402 through an optical path and then the interfered light is measured by a photodiode 403 arranged inside the laser section 401.

In Fig. 2, if the advancing direction of the ultrasonic vibration 6 generated in the measured object 4 is vibrated towards the direction indicated by an arrow, then a Doppler shift occurs, and the frequency of the scattered light is slightly changed. The scattered light is interfered with the original light (back beams) inside the laser section 401, and the interfered light is detected by a built-in photodiode 403. If the interference of light is generated on the photodiode 403, then the frequency difference is detected as a beat signal.

A deformation detection procedures is described below according to the flowchart shown in Fig. 6.

In Act 1, the surface of concrete in integrity is irradiated with ultrasonic waves emitted from the vibration section 2 which is spaced from concrete by a distance L0 and simultaneously with the laser beams emitted from the vibration measurement section 1. The time (transmission time T0) elapsing from the moment the surface of concrete in integrity is irradiated with ultrasonic waves to the moment the vibration of concrete in integrity is detected by the vibration detection section 1 is measured, then the Act 2 is taken.

In Act 2, the transmission time T0 is stored in a memory as a reference transmission time, and then the Act 3 is taken. The processing in Act 1 and the processing in Act 2 constitute a reference time measurement processing.

In Act 3, a transmission time T1 is measured by detecting vibration from the moment the vibration is started in a measurement point irradiated with the laser beams emitted from the vibration measurement section 1, then Act 4 is taken.

In Act 4, the transmission time T1 is stored in the memory, and then Act 5 is taken.

In Act 5, the reference transmission time T0 is compared with the measured transmission time T1. Act 6 is taken if the measured transmission time T1 is greater than the reference transmission time T0 (T1>T0) or Act 7 is taken if the measured transmission time T1 is shorter than the reference transmission time T0 (T1<T0).

In Act 6, as the measured object is in the state shown in Fig. 4 in the case of T1 is greater than T0, then it is determined that the measured object is deformed, and Act 8 is taken to return to an initial state.

In Act 7, as the measured object is in the state shown in Fig. 2 in the case of T1 is shorter than T0, thus, it is determined that the measured object is not deformed, and Act 8 is taken.

The detailed structure of the two-dimensional laser Doppler vibrometer is described below with reference to Fig. 5.

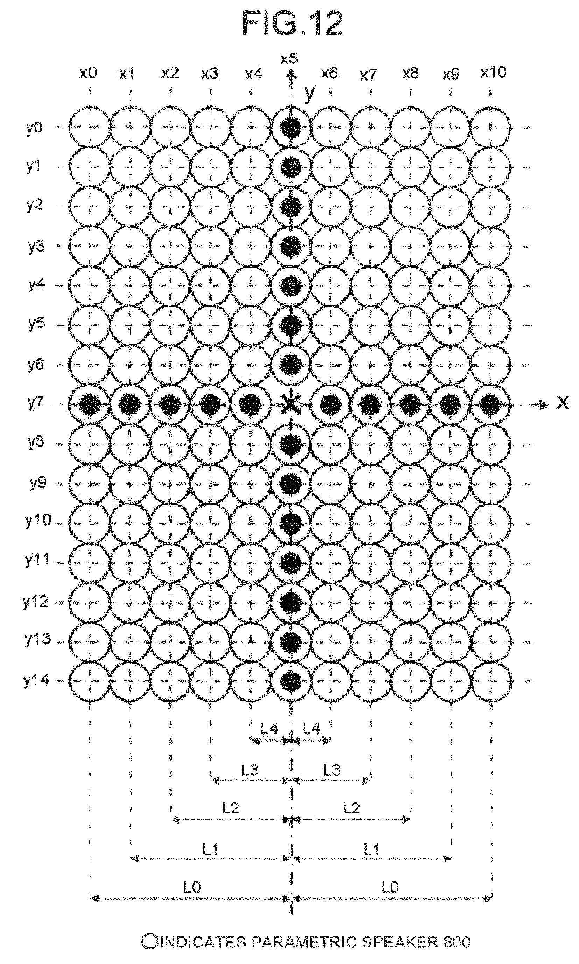

If it is set that the measured surface of the measured object 4 is an X-Y plane consisting of the X axis and the Y axis orthogonal to the X axis (refer to Fig. 12), then the two-dimensional laser Doppler vibrometer can irradiate any measurement point in the X-Y plane with laser beams.

In the present embodiment, a Galvano scanner 420 capable of rotating around the X axis and the Y axis is irradiated with laser beams, and the light reflected from the measured object is received by the laser section 401 via the Galvano scanner 420 and the optical unit 408.

### (Second Embodiment)

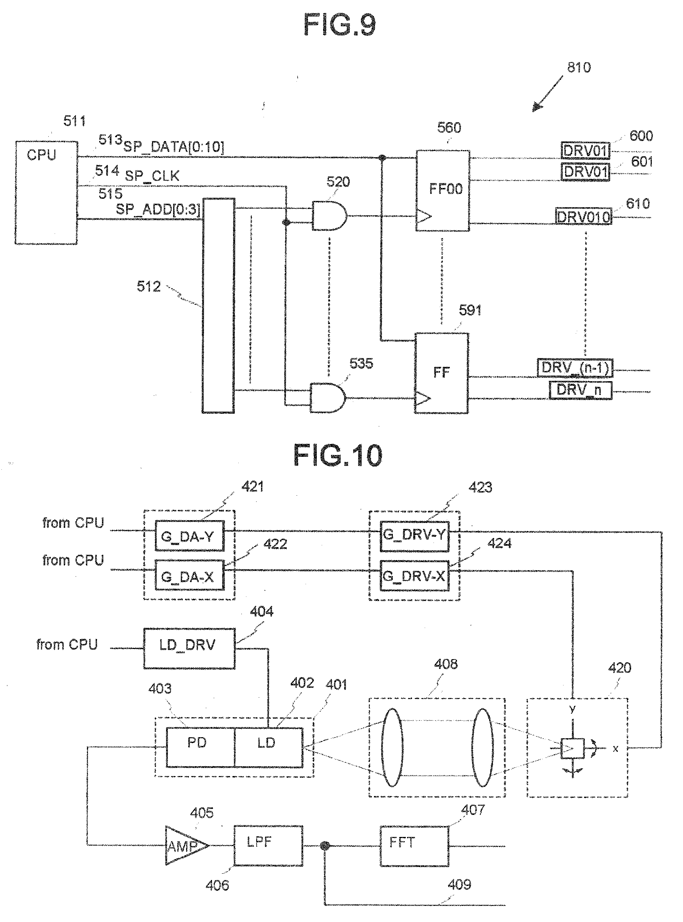

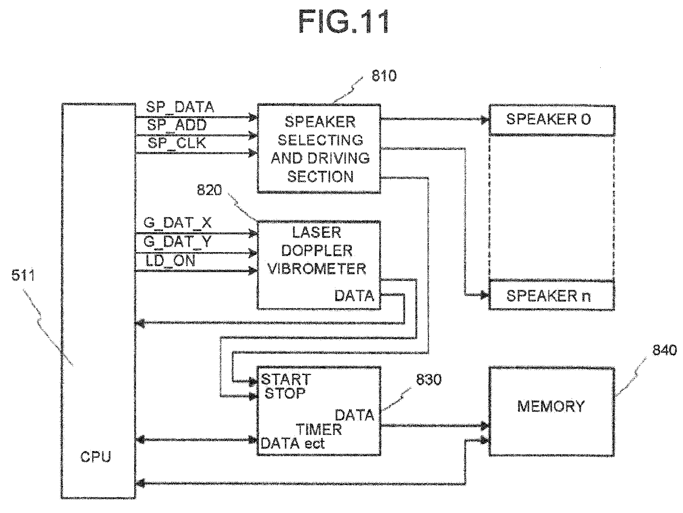

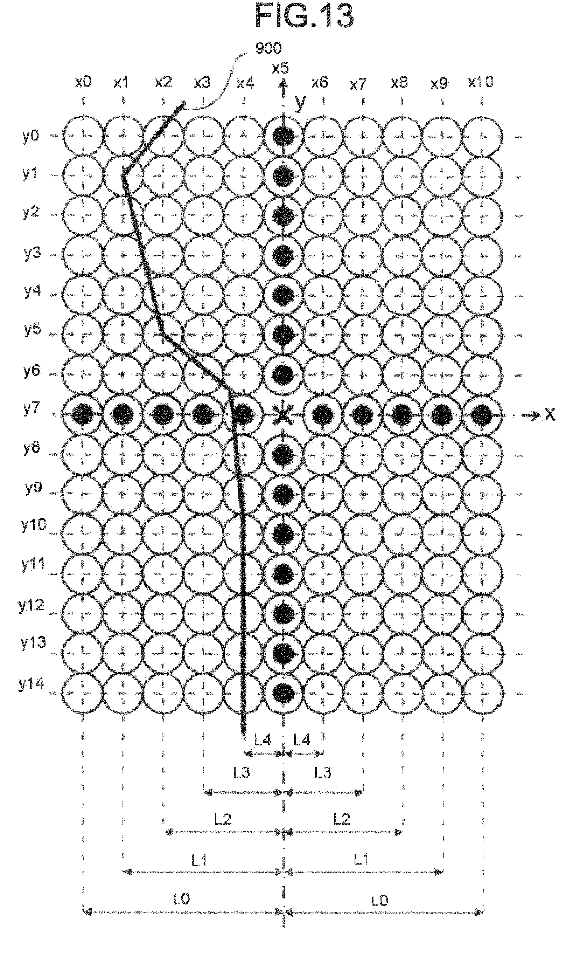

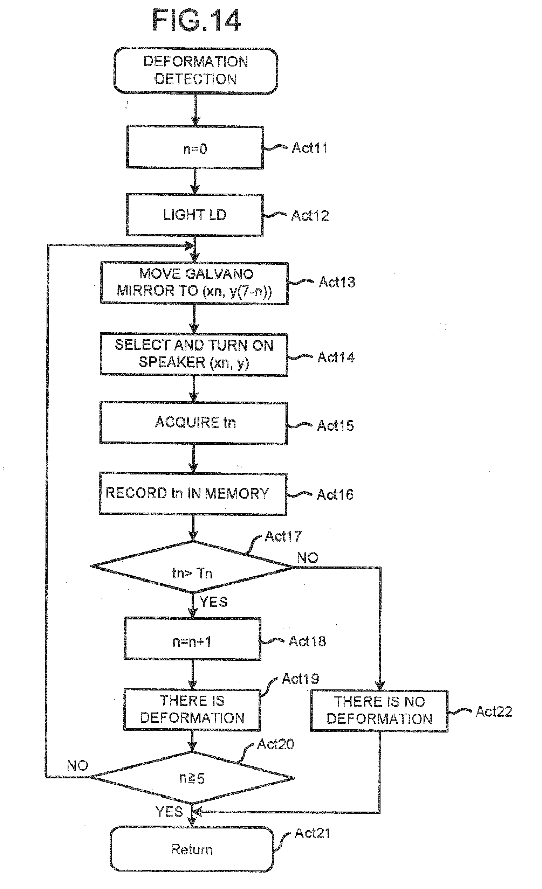

Fig. 7 is a diagram illustrating a state in which a structure is not deformed in a schematic cross-sectional side view of a structural deformation detecting device according to the second embodiment. Fig. 8 is a diagram illustrating a state in which a structure is deformed in a schematic cross-sectional view of a structural deformation detecting device according to the second embodiment. Fig. 9 is a diagram illustrating the control circuit of a parametric speaker of a vibration section shown in Fig. 7; Fig. 10 is a diagram illustrating the control circuit of a vibration measurement section shown in Fig. 7; Fig. 11 is a diagram illustrating the system configuration of the structural deformation detecting device shown in Fig. 7; Fig. 12 is a diagram illustrating a state in which a structure is not deformed in the illustration diagram of the configuration of the speaker of the structural deformation detecting device shown in Fig. 7. Fig. 13 is a diagram illustrating a state in which a structure is deformed in the illustration diagram of the scanning operation of the structural deformation detecting device shown in Fig. 7; Fig. 14 is a flowchart illustrating the procedures of a structural deformation detection operation executed by the system shown in Fig. 11.

As shown in Fig. 7, Fig. 8 and Fig. 13, a plurality of speakers 800 are arranged into a matrix on the housing 3. If the arrangement position of the lens section 430 is set to a position indicated by (x5, y7) (this position is referred to as a home position), then the speakers 800 are arranged at the positions other than the position of the lens section 430.

The vibration section 2 can drive any speaker 800. The two-dimensional laser Doppler vibrometer drives the Galvano scanner 420 to move between x0-10 on the y7 axis or between y0-y14 on the X5 axis. If the distance between x0 and x5 is set to be L0, then the speaker 800 at coordinates (x0, y7) sounds, the two-dimensional laser Doppler vibrometer measures the vibration of the home position, thereby measuring a reference transmission time T0.

Next, a speaker selecting and driving section 810 for selecting a parametric speaker 800 serving as the vibration section 2 and driving the selected parametric speaker 800 is described below with reference to Fig. 9 and Fig. 12.

In the present embodiment, as each parametric speaker 800 is provided with a dedicated drive circuit, the number of parametric speakers 800 (one or all 164 parametric speakers 800) can be driven optionally to emit ultrasonic waves. The combination of a parametric speaker 800 and a drive circuit is specified by a matrix (x, y), for example, a DRV00 is distributed for (x0, y0), and a DRV010 is distributed for (x10, y0).

The plurality of (164, in Fig. 12) parametric speakers 800 are driven by dedicated speaker drive circuit sections (DRV00, DRV01, ...... DRVn) 600, 601,... 610 ... to sound, respectively. The control circuit of the parametric speaker 800 comprises a CPU 511 for controlling the whole parametric speaker 800, a shift register 512, a plurality of AND circuits 520-535, a plurality of flip-flop circuits 560-591 and a plurality of speaker drive circuit sections DRV00, DRV01, ... DRVn. The plurality of flip-flop circuits 560-591 output drive signals to corresponding flip-flop circuits. The output of each of the AND circuits 520-535 is input to the trigger of a corresponding one of the flip-flop circuits 560-591.

The CPU 511 for controlling the whole parametric speaker 800 can drive any speaker 800 to sound with a data line 513, an address line 515 for specifying a speaker and a clock line 514. The data lines 513 are input to the flip-flop circuits 560-591. The address line 515 is input to the shift register 512. The shift register 512 outputs a drive signal to one input terminal of AND circuit corresponding to a designated parametric speaker 800. The clock line 514 inputs a clock signal to the other input terminal of each AND circuit. Data, for example, frequency, is output from the data line 513 to a specified speaker 800 through the address line 515 of the CPU 511, and if the clock signal of the clock line 514 is output, then the specified speaker 800 is driven to sound at that time, and the driving is stopped if the clock signal is reversed. The speakers 800 driven to sound are orderly switched according to a given sequence through a scanning processing.

Next, the detailed structure of the two-dimensional laser Doppler vibrometer is described below with reference to Fig. 10.

If it is assumed that the measured surface of the measured object 4 is an X-Y plane consisting of the X axis and the Y axis orthogonal to the X axis, then the two-dimensional laser Doppler vibrometer can irradiate any measurement point in the X-Y plane with laser beams.

In the present embodiment, a Galvano scanner 420 capable of rotating around the X axis and the Y axis is irradiated with laser beams, and the light reflected from the measured object is received by the laser section 401 via the Galvano scanner 420 and the optical unit 408.

The photodiode 403 for a power monitor is arranged inside the laser section 401. The semiconductor laser 402 is driven by a current driver 404 with a constant current. The output from the photodiode 403 is converted and amplified by a current-voltage conversion amplifier 405 and then filtered by a low-pass filter to cut off noise of high-frequency component. The signal 409, which is a beat signal,is monitored to determine whether or not a Doppler shift occurs. Further, Fourier transformation is conducted with FFT 407 to obtain a power spectrum of laser intensity.

The reason why this method is selected is that the method needs no reference light, which is unlike the conventional optical heterodyne detection method, thus structurally simplifying a constitution of the optional system, lowering cost and achieving a small device.

The Galvano scanner 420 is a two-dimensional scanning module which scans with laser beams for measuring. The laser beams for measuring are concentrated towards the surface of the reflecting mirror of the Galvano scanner 420 through the optical unit 408. If the mirror is rotated around the vertical axis (the Y axis) shown in Fig. 10, then a scan processing is carried out along the X-axis direction with laser beams, and if the mirror is rotated around the horizontal axis (the X axis) shown in Fig. 10, then a scan processing is carried out along the Y-axis direction with laser beams. Through the operation, the laser beams for measuring can be freely shifted to any position determined by a coordinate in the X-axis direction and a coordinate in the Y-axis direction shown in Fig. 12.

The mirror of the Galvano scanner 420 is rotationally driven around the X axis by an X-axis actuator (not shown) for realizing the driving around the X axis or around the Y axis by a Y-axis actuator (not shown) for realizing the driving around the Y axis. If the CPU 511 generates a coordinate (X, Y) instruction for determining a measurement point, then drive signals are separately output from a Y-axis coordinate data section 421 and an X-axis coordinate data section 422 to a Y-axis driver 423 and an X-axis driver 424. Further, the Y-axis actuator and the X-axis actuator are driven. As a result, the measurement point is irradiated with laser beams.

The system configuration of the structural deformation detecting device is described below with reference to the circuit diagram shown in Fig. 11. Detailed components of the structural deformation detecting device which are already described above with reference to Fig. 9 and Fig. 10 are not described here repeatedly.

According to the systematic structure of the structural deformation detecting device, the CPU 511 drives a speaker selecting and driving section 810 to output ultrasonic waves from an optional parametric speaker 800. The speaker selecting and driving section 810 outputs a drive signal to the start terminal of a timer 830.

On the other hand, the CPU 511 drives a laser Doppler vibrometer 820 to output a data signal indicating a measurement result to the stop terminal of the timer 830 and the CPU 511.

If a speaker drive signal is input to the start terminal, then the timer 830 is started, if a data signal indicating a measurement result obtained from the laser Doppler vibrometer 820 is input, then the timer 830 is stopped. Further, the data indicating a measurement result is recorded in a memory 840.

In this case, the number of the irradiation points (164 points shown in Fig. 12) of ultrasonic wave which is emitted towards the the measured object 4 by the parametric speaker 800 is one. Correspondingly, the laser Doppler vibrometer 820 causes the Galvano scanner 420 to irradiate any measurement point in an area limited by (x5, yn) and (Xn, y7) with laser beams to detect vibration at a measurement point, for example, which is set into a matrix.

As shown in Fig. 12, in the structural deformation detecting device 10 of the present embodiment, each of the 164 parametric speakers 800 constituting the vibration section 2 is indicateed by o. The parametric speakers 800 are arranged at equal intervals into a matrix. Further, an optional parametric speaker 800 can be selected to be driven to sound to emit ultrasonic waves towards the measured object 4.

On the other hand, the vibration measurement section 1 is indicated by the sign 'x' which is located in the center of Fig. 12. The vibration measurement section 1 is the two-dimensional scanning laser Doppler vibrometer shown in Fig. 10. The central position shown in Fig. 12 indicates a home position, and by designating coordinates (x, y), laser beams for measuring can be freely moved to any position (a position indicated by ● in the present embodiment) on the measured object.

That is, by arranging a plurality of vibration sections 2 in the plane and shifting the measurement position of the vibration measurement section 1 freely to any position on the measured object 4, a deformation, for example, a crack, between an optionally selected vibration section 2 and the measurement vibration section 1 can be detected. Further, the extension of the crack can also be measured.

Fig. 13 is a diagram illustrating a method for detecting the extension of a deformation such as a crack. Fig. 14 is a flowchart illustrating the procedures of an operation of detecting the extension of a deformation such as a crack.

In Fig. 13, for example, a deformation, for example, a crack 900, generated on the lining part of a tunnel made of concrete is detected by the structural deformation detecting device 10. As the crack 900 does not always extend linearly but extends while heading a continuously changed direction in some cases, as shown in Fig. 13. Further, a crack can be visually confirmed in some cases but cannot be visually confirmed in other cases. For the sake of convenience, a crack which can be detected by the structural deformation detecting device described herein but cannot be confirmed visually is presented by a thick black line in Fig. 13.

Fig. 13 is a diagram illustrating an image formed by projecting the vibration section 2 and the vibration measurement section 1 of the structural deformation detecting device 10 on the lining part of a tunnel. For example, the coordinates (x0, y0) indicate the position of the projection of the parametric speaker 800 serving as the vibration section 2, wherein the position is irradiated with output ultrasonic waves.

Similarly, the coordinates (x5, y7), which indicates the home position of the laser Doppler vibrometer 820 serving as the vibration measurement section 1, is the position irradiated with laser beams for measuring. Further, the coordinates (x0, y7), (x1, y7), (x2, y7), (x3, y7), (x4, y7), (x6, y7), (x7, y7), (x8, y7), (x9, y7) and (x10, y7) are images formed by shifting laser beams for measuring left or rightin the X-axis direction and irradiating these coordinate points with the laser beams for measuring.

Similarly, the coordinates (x5, y0), (x5, y1), (x5, y2), (x5, y3), (x5, y4), (x5, y5), (x5, y6), (x5, y7), (x5, y8), (x5, y9), (x5, y10), (x5, y11), (x5, y12), (x5, y13) and (x5, y14) are images formed by shifting laser beams for measuring up or down in the Y-axis direction and irradiating these coordinate points with the laser beams for measuring.

The area into which the parametric speaker 800 serving as the vibration section 2 or the laser Doppler vibrometer 820 of the vibration measurement section 1 is projected using laser beams for measuring is the detection area of the structural deformation detecting device of the present embodiment.

The area into which the parametric speaker 800 serving as the vibration section 2 or laser beams for measuring of the laser Doppler vibrometer 820 of the vibration measurement section 1 is projected is the detection area of the structural deformation detecting device 10.

First, a measurement processing is carried out using the structural deformation detecting device 10 on concrete in integrity. Herein, the CPU 511 moves the irradiation position of laser beams for measuring emitted from the laser Doppler vibrometer 820 to the home position (x5, y7) with the mirror of the Galvano scanner 420 and causes the laser section 402 to emit laser beams. The laser beams are concentrated on the mirror surface of the Galvano scanner 420 by the lens 408 and sequentially reflected by the mirror surface and converged by the lens 430 onto a measurement point, that is, concrete. Through the operation, the vibration of the measurement point (x5, y7) is measured.

Next, the parametric speaker 800 at coordinates (x0, y7) is selected. The CPU 511 sets [000 0000 0001] for the data line 513 and [1000] for the address line 515. Further, the clock line 514 is activated to generate a clock to select a driver for driving the parametric speaker 800 at coordinates (x0, y7), thereby generating ultrasonic waves (the start of time measurement). The ultrasonic waves are transmitted in the surface of the measured object 4, that is, concrete, while vibrating the measured object 4 and is then detected by the laser Doppler vibrometer 820 (the end of time measurement) the moment the ultrasonic waves reach the measurement position (x5, y7) of the laser Doppler vibrometer 820. The measured time is stored in the memory 840. That is, the transmission time T0 taken for the transmission of ultrasonic waves for a distance L0 is stored.

Consequentially, the parametric speaker 800 at coordinates (x1, y7) is selected. The CPU 511 sets [0000 0000 0010] for the data line 513 and [1000] for the address line 515. Further, the clock line 514 is activated to generate a clock to select a driver for driving the parametric speaker 800 at coordinates (x1, y7), thereby generating ultrasonic waves (the start of time measurement). The ultrasonic waves are transmitted in the surface of the measured object 4, that is, concrete, while vibrating the measured object 4 and is then detected by the laser Doppler vibrometer 820 (the end of time measurement) the moment the ultrasonic waves reach the measurement position (x5, y7) of the laser Doppler vibrometer 820. The measured time is stored in the memory 840. That is, the transmission time T1 taken for the transmission of ultrasonic waves for a distance L1 is stored.

Afterwards, the parametric speakers at coordinates (x2, y7), (x3, y7) and (x4, y7) are successively selected in the same way to measure a transmission time T2 taken for the transmission of ultrasonic waves for a distance L2, a transmission time T3 taken for the transmission of ultrasonic waves for a distance L3 and a transmission time T4 taken for the transmission of ultrasonic waves for a distance L4, and then the measured time L2, the measured time T3 and the measured time L4 are separately stored in the memory 840.

The measurement results obtained by moving the laser beams for measuring emitted from the laser Doppler vibrometer 820 to (x5, y0), (x5, y1), (x5, y2), (x5, y3), (x5, y4), (x5, y5), (x5, y6), (x5, y8), (x5, y9), (x5, y10), (x5, y11), (x5, 12), (x5, 13) and (x5, y14) may be used to deduce the relationship between each the parametric speaker 800 and the measurement position of the laser Doppler vibrometer 820 in the X axis direction, thus greatly shortening measurement time (apparently, more time can be spent to measure each point).

The transmission time taken for the transmission of ultrasonic waves through concrete in integrity is measured through the foregoing operations.

Next, the device 10 is arranged for the measured object 4 (the lining part of a tunnel made of concrete in the example) to carry out a measurement operation (Fig. 13 and Fig. 14).

Further, the coordinates of the irradiation position of the laser beams through the movement of the mirror (galvano mirror) of the Galvano scanner 420 are indicated by (xn, y(7-n)), and the coordinates of a selected parametric speaker 800 are indicated by (xn, y).

Before carrying out a detection operation, the CPU 511 moves the irradiation position of the laser beams for measuring emitted from the laser Doppler vibrometer 820 to the home position (x5, y7) with the Galvano mirror of the Galvano scanner 420 and causes the laser section 402 to emit laser beams. The laser beams are concentrated on the mirror surface of the galvano mirror of the Galvano scanner 420 by the lens 408 and sequentially reflected by the mirror surface and converged by the lens 430 onto a concrete serving as the measurement point. Through the operation, the vibration of the measurement point (x5, y7) is measured.

Sequentially, n is set to be 0 in Act 11, then Act 12 is taken to cause the laser section 402 to emit laser beams, and then Act 13 is taken.

In Act 13, the galvano mirror is moved to coordinates (x0, y7), and then Act 14 is taken.

In Act 14, the parametric speaker 800 at coordinates (x0, y7) is selected, and then Act 15 is taken. The CPU 511 sets [0000 00000001] for the data line 513 and [1000] for the address line 515. Further, the clock line 514 is activated to generate a clock to select a drive for driving the parametric speaker 800 at coordinates (x0, y7), thereby generating ultrasonic waves (the start of time measurement).

In Act 15, the time t0 taken by the vibration caused by the ultrasonic waves to reach the measurement point is measured, and then Act 16 is taken. That is, concrete is vibrated by the ultrasonic waves and the vibration resulting from the vibration caused by the ultrasonic waves is transmitted in the surface of concrete and is then detected by the laser Doppler vibrometer (the end of time measurement) the moment (t0) the vibration reaches the coordinates (x5, y7) serving as the measurement position of the laser Doppler vibrometer 820.

The transmission time t0 is stored in the memory 840 in Act 16, and then Act 17 is taken.

The reference transmission time Tn is compared with the measured time tn in Act 17, and Act 18 is taken if the measured time tn is greater than the reference transmission time Tn (tn>Tn) or Act 22 is taken if the measured time tn is shorter than the reference transmission time Tn (tn<Tn). In the case shown in Fig. 13, as there is a crack between x0 and x5, the measured time tn is greater than the reference measurement time T0 measured in concrete in integrity (t0>T0). The CPU 511 determines the existence or absence of a crack according to the result of the comparison of the measured transmission time with the reference transmission time (Act 19, Act 22).

In Act 18, n is increased by 1, the irradiation position of laser beams is moved to the next position and the next speaker 800 to be driven to sound is selected, and then Act 19 is taken.

If it is determined in Act 19 that there is a deformation such as a crack, Act 20 is taken.

In Act 20, whether or not n is greater than 5 is determined, Act 13 is taken again if n is smaller than 5 (Act 20: No). Further, if n is equal to or greater than 5 (on the X axis), then Act 21 is taken and then returns to Act 11.

That is, to detect the specific position of the crack, the vibration point is moved to be close to the measurement point, and then the same operations are carried out. A parametric speaker at coordinates (x1, y7) is selected.

If it is determined in Act 22 that there is no deformation such as a crack, the Act 21 is taken.

The CPU 511 sets [0000 0000 0010] for the data line 513 and [1000] for the address line 515 in Act 13-Act 22. Further, the clock line 514 is activated to generate a clock to select a drive for driving the parametric speaker 800 at coordinates (x1, y7), thereby generating ultrasonic waves (the start of time measurement). The ultrasonic waves vibrating concrete are transmitted in the surface of concrete and are then detected by the laser Doppler vibrometer 820 (the end of time measurement) the moment the ultrasonic waves reach the coordinates, (x5, y7), that is, the measurement position of the laser Doppler vibrometer 820. The measured time t1 is stored in the memory 840. In the case shown in Fig. 13, as there is a crack between x1 and x5, the measured time tn is longer than the reference measurement time T1 measured in concrete in integrity (t1>T1).

Then, the parametric speakers at coordinates (x2, y7), (x3, y7) and(x4, y7) are successively selected in the same way to repeat the foregoing measurement. In the case of this example, the time measured regarding the transmission of ultrasonic waves to coordinates (x4, y7) is substantially equal to t4, thus, it is determined that a crack exists between coordinates (x3, y7) and coordinates (x4, y7).

Further, the measurement point of the laser Doppler vibrometer 820 is sequentially moved to points (x5, y6), (x5, y5), (x5, y4), (x5, y3), (x5, y2), (x5, y1) and (x5, y0) to carry out the same measurement, thereby detecting the position of a crack.

### (Third Embodiment)

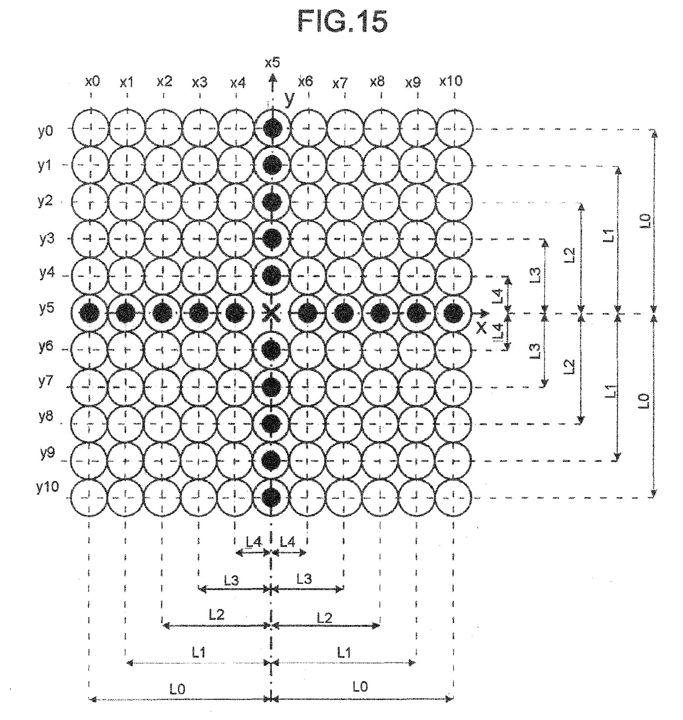

Fig. 15 is a diagram illustrating the configuration of a speaker of a structural deformation detecting device according to the third embodiment.

In Fig. 15, the parametric speakers 800 of the vibration section 2 are arranged at equal intervals in the X-axis direction and the Y-axis direction to set the whole detection range into a square.

The distances in the X-axis direction and the Y-axis direction between the parametric speakers 800 constituting the vibration section 2 and the laser Doppler vibrometers 820 serving as the vibration measurement section 1 are the same, thus, the X axis and the Y axis can be used without distinction in the extension direction of a crack. Further, a crack sharply changing in extension direction (changed by more than 90 degrees) can also be coped with.

## Claims

1. A structural deformation detecting device, comprising:
a vibration section configured to include a plurality of vibrators for vibrating a structure serving as an object to be measured in a non-contact manner;
a vibration measurement section configured to detect, in a non-contact manner, the vibration generated in the object to be measured at any measurement position;
a housing on which the vibration section and the vibration measurement section are arranged at a specific interval;
a time measurement section configured to measure the time elapsing till the vibration of the object to be measured caused by an optional vibrator is detected by the vibration measurement section at a specific position; and
a deformation determination section configured to determine whether or not there is a deformation by comparing the time taken for the transmission of vibration from the vibration position to the measurement position in a deformation-free state with the time measured by the time measurement section.

2. The structural deformation detecting device according to claim 1, wherein
the plurality of vibrators constituting the vibration section are arranged into a matrix.

3. The structural deformation detecting device according to claim 1 or 2, wherein
the vibration measurement section is configured to set a measurement position optionally on the measured surface of the measured object.

4. The structural deformation detecting device according to any one of claims 1 to 3, wherein
the vibrator comprises a parametric speaker.

5. The structural deformation detecting device according to any one of claims 1 to 4, wherein
the vibration measurement section comprises a two-dimensional laser Doppler vibrometer.

6. The structural deformation detecting device according to any one of claims 1 to 5, wherein the vibration measurement section comprises a two-dimensional laser Doppler vibrometer that is based on a self-mixing interferometry.

7. A method for detecting a deformation in a structure, comprising the steps of:
- providing a housing comprising a vibration section and a vibration measurement section that are arranged at a specific interval;
- vibrating a structure serving as a measured object in a non-contact manner;
- detecting in a non-contact manner the vibration generated in the measured object at any measurement position;
- measuring the time elapsing till the vibration of the measured object caused by an optional vibrator is detected through the vibration measurement section at a specific position; and
- determining a deformation by comparing the time taken for the transmission of vibration from the vibration position to the measurement position in a deformation-free state with the time measured through the time measurement step.

8. The method according to claim 7, wherein the vibration measurement step comprises the step of emitting laser beams for irradiation, the method further comprising the steps of:
- setting, as the specific distance, a distance between the vibration point on the measured object and the irradiation point of the laser beams emitted from the vibration measurement step.

9. The method according to claim 7 or 8, wherein the deformation determination step comprises determining whether or not the time taken for the transmission of the vibration for the specific distance is different from a specific time.

10. The method according to any one of claims 7 to 9, wherein the vibration section and the vibration measurement section set an ultrasonic wave irradiation position and a laser beam irradiation position, respectively, for the object to be measured, and the method further comprises the step of keeping a fixed position relationship between both positions, when a measurement position is changed.

11. The method according to any one of claims 7 to 10, wherein the vibration measurement section comprises a two-dimensional laser Doppler vibrometer based on a self-mixing interferometry and the vibration-detecting step comprises detecting it by using the two-dimensional laser Doppler vibrometer.

12. The use of the structural deformation detecting device according to any one of claims 1 to 6, for detecting the deformation of a structure in a non-contact manner.

13. The use according to claim 11, wherein the structure has a surface made of concrete.
